# EUROPEAN PATENT APPLICATION

(11) **EP 4 650 743 A1**
(43) Date of publication of application: **19.11.2025**
(21) Application number: 25171969.6
(22) Date of filing: 23.04.2025
(51) Int. Cl.: G01M 15/14, F01D 17/02, F01D 21/00, G01M 15/02

(54) **INSPECTION ASSEMBLY, SYSTEM, AND METHOD FOR A GAS TURBINE ENGINE**

(30) Priority: 16.05.2024 GB 202406918
(71) Applicant: Rolls-Royce plc, London N1 9FX (GB)
(72) Inventor: Loreti, Stefano, Derby, DE24 8BJ (GB)
(74) Representative: Rolls-Royce plc

(57) **Abstract**

An inspection system (50, 150) for a gas turbine engine (10) having an engine core (11), a casing (35), and a static aerodynamic fairing (40) includes an inspection assembly (100) including: an elongate member (102) extending along a longitudinal axis (60) from a first end (104) to a second end (106) and configured to be at least partially inserted through the static aerodynamic fairing (40) into a portion of the engine core (11) radially inboard of the static aerodynamic fairing (40); a coupler (108) disposed proximal to the first end (104) and configured to removably couple the elongate member (102) to the casing (11); and a sensor member (110) pivotally coupled to the elongate member (102) at the second end (106) and including a sensor (111). The sensor member (110) is pivotable between an insertion position (130) and a sensing position (135). The inspection system (50, 150) further includes: a guidance member (120) located within the engine core (11) and including a guidance surface (122); and a locking mechanism (124) operatively coupled to the sensor member (110).

## Description

### FIELD

This disclosure relates to gas turbine engines, and in particular, to an inspection assembly, an inspection system including the inspection assembly, and an inspection method for gas turbine engines.

### BACKGROUND

Generally, a gas turbine engine includes various sensors that are located within an engine core of the gas turbine engine in order to monitor safety, performance, and/or health of the gas turbine engine. These sensors may need replacement or repairment from time to time. For example, the sensors that are located in gas paths within the engine core may be exposed to extreme conditions (i.e., high temperature and high pressure), and may need to be repaired or replaced from time to time. However, accessing these sensors may require partial or full disassembly of one or more engine modules, which can be expensive and time-consuming. Furthermore, accessing these sensors for repairment or replacement may require removal of the gas turbine engine from an airplane wing, which may further increase cost of operations and maintenance time.

### SUMMARY

In a first aspect, there is provided an inspection system for a gas turbine engine having an engine core, a casing, and a static aerodynamic fairing. The inspection system includes an inspection assembly. The inspection assembly includes an elongate member extending along a longitudinal axis from a first end to a second end. The elongate member is configured to be at least partially inserted through the static aerodynamic fairing of the gas turbine engine into a portion of the engine core radially inboard of the static aerodynamic fairing. The inspection assembly further includes a coupler disposed proximal to the first end of the elongate member. The coupler is configured to removably couple the elongate member to the casing of the gas turbine engine. The inspection assembly further includes a sensor member pivotally coupled to the elongate member at the second end. The sensor member includes at least one sensor configured to sense one or more parameters of the gas turbine engine. The sensor member is pivotable relative to the elongate member between an insertion position and a sensing position. In the insertion position, the sensor member is inclined by a first inclination angle with respect to the longitudinal axis. In the sensing position, the sensor member is inclined by a second inclination angle with respect to the longitudinal axis. The second inclination angle is greater than the first inclination angle. The inspection system further includes a guidance member that forms part of or is configured to be fixedly coupled to a static structure that is located within the engine core of the gas turbine engine. The guidance member includes a guidance surface that faces the inspection assembly. The guidance surface is inclined to the longitudinal axis of the elongate member by a guidance angle. The inspection system further includes a locking mechanism operatively coupled to the sensor member. The locking mechanism is configured to selectively lock the sensor member in the sensing position. Upon insertion of the elongate member into the engine core, the sensor member engages with the guidance surface. Upon engagement with the guidance surface, the sensor member pivots relative to the elongate member from the insertion position to the sensing position while the elongate member is being inserted into the engine core. Upon pivotal movement of the sensor member to the sensing position, the locking mechanism locks the sensor member in the sensing position.

The inspection assembly of the inspection system may be installed in the gas turbine engine from outside of the engine core. The inspection system may allow installation and removal of the inspection assembly to and from the gas turbine engine with reduced, if any, disassembly of the engine core. The inspection assembly may employ a combination of a linear movement of the elongate member into the engine core and the pivotal movement of the sensor member into the sensing position, such that the sensor member moves to and can be selectively locked in the sensing position. In the sensing position of the sensor member, the at least one sensor may optimally sense the one or more parameters of the gas turbine engine. Subsequently, the coupler may removably couple the elongate member to the casing to install the inspection assembly in the gas turbine engine. This may allow the inspection assembly to be a line replaceable unit (LRU). That is, the inspection assembly may be quickly replaceable at an operating location. The inspection system may thus reduce costs and time associated with the replacement of the at least one sensor.

In an embodiment, the inspection assembly further includes a pin joint that pivotally couples the sensor member to the elongate member.

In an embodiment, the inspection assembly further includes one or more cables, optionally mineral insulated cables, at least partially received through the elongate member and communicably coupled to the at least one sensor.

In an embodiment, the inspection assembly further includes a connector disposed proximal to the first end of the elongate member and connected to the one or more cables. The inspection assembly further includes a processor communicably coupled to the at least one sensor via the connector and the one or more cables. The processor is configured to receive one or more signals from the at least one sensor.

In an embodiment, the inspection assembly further includes one or more sealing rings disposed around the elongate member and configured to provide a seal between segregated internal cavities.

In an embodiment, the first inclination angle is zero, such that the sensor member is parallel to the longitudinal axis in the insertion position.

In an embodiment, the second inclination angle is from 5 degrees to 120 degrees.

In an embodiment, the guidance angle is from 5 degrees to 120 degrees.

In an embodiment, each of the at least one sensor is a microwave sensor, a camera sensor, a temperature sensor, a pH sensor, a chemical element sensor, or a pressure sensor.

In an embodiment, the locking mechanism includes a biasing member connected between the elongate member and the sensor member.

In an embodiment, the locking mechanism includes a funnel configured to removably receive the sensor member therein.

In an embodiment, the inspection system further includes an actuator at least partially received through the elongate member and operably coupled to the locking mechanism. The actuator is configured to operate the locking mechanism to unlock the sensor member from the sensing position, such that the sensor member is pivotable to the insertion position.

In a second aspect, there is provided an inspection method for a gas turbine engine having an engine core, a casing, and a static aerodynamic fairing. The inspection method includes providing an inspection assembly. The inspection assembly includes an elongate member extending along a longitudinal axis from a first end to a second end. The inspection assembly further includes a coupler disposed proximal to the first end of the elongate member. The inspection assembly further includes a sensor member pivotally coupled to the elongate member at the second end. The sensor member includes at least one sensor configured to sense one or more parameters of the gas turbine engine. The inspection method further includes inserting the elongate member at least partially through the static aerodynamic fairing of the gas turbine engine into a portion of the engine core radially inboard of the static aerodynamic fairing. The inspection method further includes engaging the sensor member with a guidance surface of a guidance member that forms part of or is configured to be fixedly coupled to a static structure located within the engine core of the gas turbine engine. The guidance surface is inclined to the longitudinal axis of the elongate member by a guidance angle. In an insertion position, the sensor member is inclined by a first inclination angle with respect to the longitudinal axis. In a sensing position, the sensor member is inclined by a second inclination angle with respect to the longitudinal axis. The second inclination angle is greater than the first inclination angle. The inspection method further includes pivoting the sensor member relative to the elongate member from the insertion position to the sensing position while the elongate member is being inserted into the engine core. The inspection method further includes locking, via a locking mechanism, the sensor member in the sensing position. The inspection method further includes removably coupling, via the coupler, the elongate member to the casing of the gas turbine engine.

The inspection method may enable installation of the inspection assembly in the gas turbine engine from outside of the engine core. The inspection method may allow installation and removal of the inspection assembly to and from the gas turbine engine with reduced, if any, disassembly of the engine core. Using the inspection method, the inspection assembly may employ a combination of a linear movement of the elongate member into the engine core and the pivotal movement of the sensor member into the sensing position, such that the sensor member moves to and can be selectively locked in the sensing position. In the sensing position of the sensor member, the at least one sensor may optimally sense the one or more parameters of the gas turbine engine. Subsequently, the coupler may removably couple the elongate member to the casing to install the inspection assembly in the gas turbine engine. This may allow the inspection assembly to be a line replaceable unit (LRU). That is, the inspection assembly may be quickly replaceable at an operating location. The inspection method may thus reduce costs and time associated with the replacement of the at least one sensor.

In an embodiment, the inspection method further includes communicably coupling a processor to the at least one sensor by a connector and one or more cables, optionally mineral insulated cables. The inspection method further includes receiving, by the processor, one or more signals from the at least one sensor.

In an embodiment, the inspection method further includes operating, via an actuator, the locking mechanism to unlock the sensor member from the sensing position, such that the sensor member is pivotable to the insertion position.

In a third aspect, there is provided an inspection assembly for a gas turbine engine having an engine core, a casing, and a static aerodynamic fairing. The inspection assembly includes an elongate member extending along a longitudinal axis from a first end to a second end. The elongate member is configured to be at least partially inserted through the static aerodynamic fairing of the gas turbine engine into a portion of the engine core radially inboard of the static aerodynamic fairing. The inspection assembly further includes a coupler disposed proximal to the first end of the elongate member. The coupler is configured to removably couple the elongate member to the casing of the gas turbine engine. The inspection assembly further includes a sensor member pivotally coupled to the elongate member at the second end. The sensor member includes at least one sensor configured to sense one or more parameters of the gas turbine engine. The sensor member is pivotable relative to the elongate member between an insertion position and a sensing position. In the insertion position, the sensor member is inclined by a first inclination angle with respect to the longitudinal axis. In the sensing position, the sensor member is inclined by a second inclination angle with respect to the longitudinal axis. The second inclination angle is greater than the first inclination angle. Upon insertion of the elongate member into the engine core, the sensor member is configured to engage with a guidance surface of a guidance member that forms part of or is configured to be fixedly coupled to a static structure located within the engine core of the gas turbine engine. Upon engagement with the guidance surface, the sensor member is configured to pivot relative to the elongate member from the insertion position to the sensing position while the elongate member is being inserted into the engine core. Upon pivotal movement of the sensor member to the sensing position, the sensor member is configured to be locked in the sensing position.

The inspection assembly may be installed in the gas turbine engine from outside of the engine core. Specifically, the inspection assembly may be installed and removed to and from the gas turbine engine with reduced, if any, disassembly of the engine core. The inspection assembly may employ a combination of a linear movement of the elongate member into the engine core and the pivotal movement of the sensor member into the sensing position, such that the sensor member moves to and can be selectively locked in the sensing position. In the sensing position of the sensor member, the at least one sensor may optimally sense the one or more parameters of the gas turbine engine. Subsequently, the coupler may removably couple the elongate member to the casing to install the inspection assembly in the gas turbine engine. This may allow the inspection assembly to be a line replaceable unit (LRU). That is, the inspection assembly may be quickly replaceable at an operating location. The inspection assembly may thus reduce costs and time associated with the replacement of the at least one sensor.

In an embodiment, the inspection assembly further includes a pin joint that pivotally couples the sensor member to the elongate member.

In an embodiment, the inspection assembly further includes one or more cables, optionally mineral insulated cables, at least partially received through the elongate member and communicably coupled to the at least one sensor.

The inspection assembly further includes a connector disposed proximal to the first end of the elongate member and connected to the one or more cables. The inspection assembly further includes a processor communicably coupled to the at least one sensor via the connector and the one or more cables. The processor is configured to receive one or more signals from the at least one sensor.

In an embodiment, the inspection assembly further includes one or more sealing rings disposed around the elongate member and configured to provide a seal between segregated internal cavities.

As noted elsewhere herein, the present disclosure may relate to a gas turbine engine. Such a gas turbine engine may comprise an engine core comprising a turbine, a combustor, a compressor, and a core shaft connecting the turbine to the compressor. Such a gas turbine engine may comprise a fan (having fan blades) located upstream of the engine core.

Arrangements of the present disclosure may be particularly, although not exclusively, beneficial for fans that are driven via a gearbox. Accordingly, the gas turbine engine may comprise a gearbox that receives an input from the core shaft and outputs drive to the fan so as to drive the fan at a lower rotational speed than the core shaft. The input to the gearbox may be directly from the core shaft, or indirectly from the core shaft, for example via a spur shaft and/or gear. The core shaft may rigidly connect the turbine and the compressor, such that the turbine and compressor rotate at the same speed (with the fan rotating at a lower speed). The gearbox may be a reduction gearbox (in that the output to the fan is a lower rotational rate than the input from the core shaft). Any type of gearbox may be used.

The gas turbine engine as described and/or claimed herein may have any suitable general architecture. For example, the gas turbine engine may have any desired number of shafts that connect turbines and compressors, for example one, two or three shafts. Purely by way of example, the turbine connected to the core shaft may be a first turbine, the compressor connected to the core shaft may be a first compressor, and the core shaft may be a first core shaft. The engine core may further comprise a second turbine, a second compressor, and a second core shaft connecting the second turbine to the second compressor. The second turbine, second compressor, and second core shaft may be arranged to rotate at a higher rotational speed than the first core shaft.

In such an arrangement, the second compressor may be positioned axially downstream of the first compressor. The second compressor may be arranged to receive (for example directly receive, for example via a generally annular duct) flow from the first compressor.

In any gas turbine engine as described and/or claimed herein, a combustor may be provided axially downstream of the fan and compressor(s). For example, the combustor may be directly downstream of (for example at the exit of) the second compressor, where a second compressor is provided. By way of further example, the flow at the exit to the combustor may be provided to the inlet of the second turbine, where a second turbine is provided. The combustor may be provided upstream of the turbine(s).

The or each compressor (for example the first compressor and second compressor as described above) may comprise any number of stages, for example multiple stages. Each stage may comprise a row of rotor blades and a row of stator vanes, which may be variable stator vanes (in that their angle of incidence may be variable). The row of rotor blades and the row of stator vanes may be axially offset from each other.

The or each turbine (for example the first turbine and second turbine as described above) may comprise any number of stages, for example multiple stages. Each stage may comprise a row of rotor blades and a row of stator vanes. The row of rotor blades and the row of stator vanes may be axially offset from each other.

Gas turbine engines in accordance with the present disclosure may have any desired bypass ratio, where the bypass ratio is defined as the ratio of the mass flow rate of the flow through the bypass duct to the mass flow rate of the flow through the core at cruise conditions. The bypass duct may be substantially annular. The bypass duct may be radially outside the engine core. The radially outer surface of the bypass duct may be defined by a nacelle and/or a fan case.

Specific thrust of an engine may be defined as the net thrust of the engine divided by the total mass flow through the engine. At cruise conditions, the specific thrust of an engine described and/or claimed herein may be less than (or on the order of) any of the following: 110 Nkg⁻¹s, 105 Nkg⁻¹s, 100 Nkg⁻¹s, 95 Nkg⁻¹s, 90 Nkg⁻¹s, 85 Nkg⁻¹s or 80 Nkg⁻¹s. The specific thrust may be in an inclusive range bounded by any two of the values in the previous sentence (i.e., the values may form upper or lower bounds), for example in the range of from 80 Nkg⁻¹s to 100 Nkg⁻¹s, or 85 Nkg⁻¹s to 95 Nkg⁻¹s. Such engines may be particularly efficient in comparison with conventional gas turbine engines.

A fan blade and/or aerofoil portion of a fan blade described and/or claimed herein may be manufactured from any suitable material or combination of materials. For example, at least a part of the fan blade and/or aerofoil may be manufactured at least in part from a composite, for example a metal matrix composite and/or an organic matrix composite, such as carbon fibre.

The fan of a gas turbine as described and/or claimed herein may have any desired number of fan blades, for example 14, 16, 18, 20, 22, 24 or 26 fan blades.

The skilled person will appreciate that except where mutually exclusive, a feature or parameter described in relation to any one of the above aspects may be applied to any other aspect. Furthermore, except where mutually exclusive, any feature or parameter described herein may be applied to any aspect and/or combined with any other feature or parameter described herein.

### BRIEF DESCRIPTION OF THE DRAWINGS

Embodiments will now be described by way of example only, with reference to the FIGS, in which:
**FIG. 1** shows a sectional side view of a gas turbine engine;
**FIG. 2** shows a partial diagram of an inspection system for a gas turbine engine with a sensor member thereof in an insertion position in accordance with an embodiment of the present disclosure;
**FIG. 3** shows a diagram of an inspection assembly of the inspection system in isolation in accordance with an embodiment of the present disclosure;
**FIG. 4** shows a partial diagram of the inspection system of FIG. 2 with the sensor member in a sensing position in accordance with an embodiment of the present disclosure;
**FIG. 5** shows a partial diagram of an inspection system in accordance with another embodiment of the present disclosure; and
**FIG. 6** shows a flowchart depicting various steps of an inspection method in accordance with an embodiment of the present disclosure.

### DETAILED DESCRIPTION

Aspects and embodiments of the present disclosure will now be discussed with reference to the accompanying FIGS. Further aspects and embodiments will be apparent to those skilled in the art.

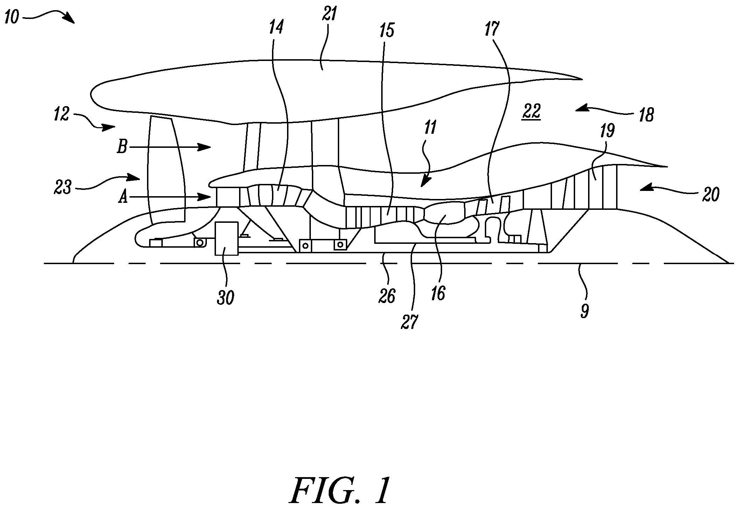

FIG. 1 illustrates a gas turbine engine 10 having a principal rotational axis 9. The engine 10 comprises an air intake 12 and a propulsive fan 23 that generates two airflows: a core airflow A and a bypass airflow B. The gas turbine engine 10 comprises a core 11 that receives the core airflow A. The engine core 11 comprises, in axial flow series, a low pressure compressor 14, a high pressure compressor 15, combustion equipment 16, a high pressure turbine 17, a low pressure turbine 19, and a core exhaust nozzle 20. A nacelle 21 surrounds the gas turbine engine 10 and defines a bypass duct 22 and a bypass exhaust nozzle 18. The bypass airflow B flows through the bypass duct 22. The fan 23 is attached to and driven by the low pressure turbine 19 via a shaft 26 and an epicyclic gearbox 30.

In use, the core airflow A is accelerated and compressed by the low pressure compressor 14 and directed into the high pressure compressor 15 where further compression takes place. The compressed air exhausted from the high pressure compressor 15 is directed into the combustion equipment 16 where it is mixed with fuel and the mixture is combusted. The resultant hot combustion products then expand through, and thereby drive, the high pressure and low pressure turbines 17, 19 before being exhausted through the core exhaust nozzle 20 to provide some propulsive thrust. The high pressure turbine 17 drives the high pressure compressor 15 by a suitable interconnecting shaft 27. The fan 23 generally provides the majority of the propulsive thrust. The epicyclic gearbox 30 is a reduction gearbox.

Note that the terms "low pressure turbine" and "low pressure compressor" as used herein may be taken to mean the lowest pressure turbine stages and lowest pressure compressor stages (i.e., not including the fan 23) respectively and/or the turbine and compressor stages that are connected together by the interconnecting shaft 26 with the lowest rotational speed in the engine (i.e., not including the gearbox output shaft that drives the fan 23). In some literature, the "low pressure turbine" and "low pressure compressor" referred to herein may alternatively be known as the "intermediate pressure turbine" and "intermediate pressure compressor". Where such alternative nomenclature is used, the fan 23 may be referred to as a first, or lowest pressure, compression stage.

Other gas turbine engines to which the present disclosure may be applied may have alternative configurations. For example, such engines may have an alternative number of compressors and/or turbines and/or an alternative number of interconnecting shafts. By way of further example, the gas turbine engine 10 shown in FIG 1 has a split flow nozzle 18, 20 meaning that the flow through the bypass duct 22 has its own nozzle 18 that is separate to and radially outside the core exhaust nozzle 20. However, this is not limiting, and any aspect of the present disclosure may also apply to engines in which the flow through the bypass duct 22 and the flow through the core 11 are mixed, or combined, before (or upstream of) a single nozzle, which may be referred to as a mixed flow nozzle. One or both nozzles (whether mixed or split flow) may have a fixed or variable area. Whilst the described example relates to a turbofan engine, the disclosure may apply, for example, to any type of gas turbine engine, such as an open rotor (in which the fan stage is not surrounded by a nacelle) or turboprop engine, for example. In some arrangements, the gas turbine engine 10 may not comprise a gearbox 30.

The geometry of the gas turbine engine 10, and components thereof, is defined by a conventional axis system, comprising an axial direction (which is aligned with the rotational axis 9), a radial direction (in the bottom-to-top direction in FIG 1), and a circumferential direction (perpendicular to the page in the FIG 1 view). The axial, radial, and circumferential directions are mutually perpendicular.

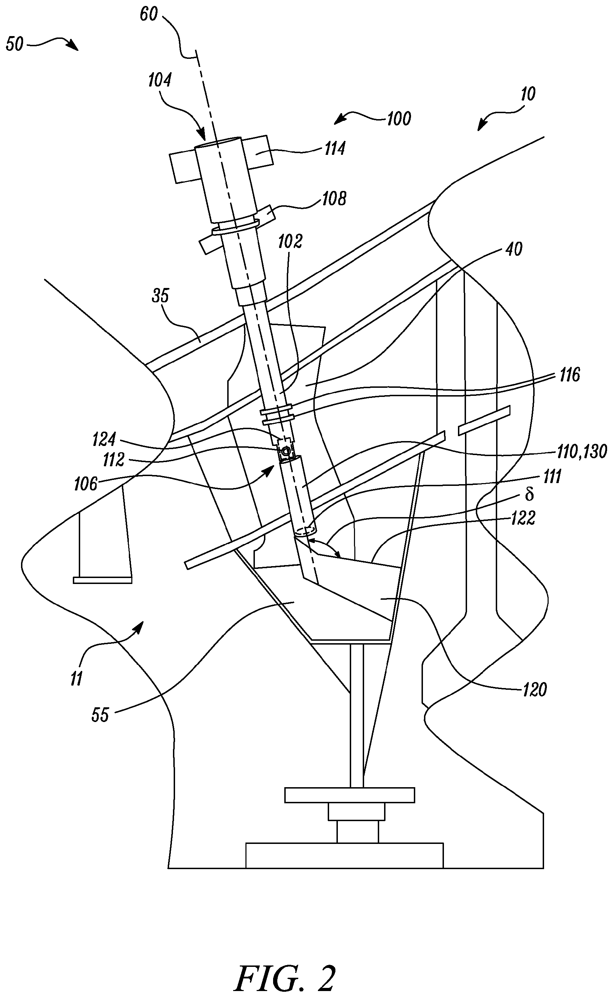

FIG. 2 shows a partial diagram of an inspection system 50 for a gas turbine engine having an engine core, a casing, and a static aerodynamic fairing. As shown in FIG. 2, the inspection system 50 is for the gas turbine engine 10 having the engine core 11, a casing 35, and a static aerodynamic fairing 40.

As used herein, the casing 35 broadly includes any casing of the engine core 11. In some embodiments, the casing 35 may be a compressor casing. In some embodiments, the casing 35 may be a turbine casing.

As used herein, the static aerodynamic fairing 40 broadly includes any static aerodynamic structure disposed within the engine core 11. The static aerodynamic fairing 40 may include inlet vanes, guide vanes, and the like. In some embodiments, the static aerodynamic fairing 40 may be a nozzle guide vane (NGV).

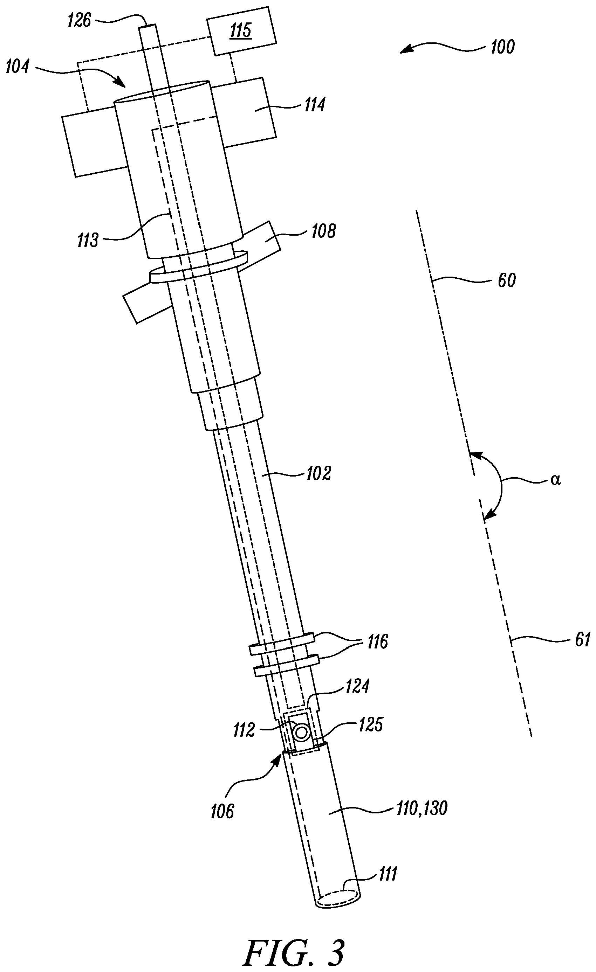

The inspection system 50 includes an inspection assembly 100. The inspection assembly 100 is shown in isolation and more detail in FIG. 3. Some elements of the inspection assembly 100 are not shown in FIG. 2 for clarity purposes.

Referring to **FIGS. 2** **and** **3****,** the inspection assembly 100 includes an elongate member 102 extending along a longitudinal axis 60 from a first end 104 to a second end 106. The elongate member 102 is configured to be at least partially inserted through the static aerodynamic fairing 40 of the gas turbine engine 10 into a portion of the engine core 11 radially inboard of the static aerodynamic fairing 40. The static aerodynamic fairing 40 may include a radially extending through-hole through which the elongate member 102 may be at least partially inserted into the portion of the engine core 11 radially inboard of the static aerodynamic fairing 40.

The elongate member 102 may be rigid. That is, the elongate member 102 may resist flexure, bending, and deformation during use. The elongate member 102 may include, for example, a rigid rod, bar, or shaft. The elongate member 102 may be hollow and define an interior volume.

The inspection assembly 100 further includes a coupler 108 disposed proximal to the first end 104 of the elongate member 102. The coupler 108 is configured to removably couple the elongate member 102 to the casing 35 of the gas turbine engine 10. The coupler 108 may be configured to removably couple the elongate member 102 to the casing 35 using any suitable coupling technique. For example, the coupler 108 may include fasteners that removably couple the elongate member 102 to the casing 35.

The inspection assembly 100 further includes a sensor member 110. The sensor member 110 may extend along a longitudinal axis 61. The sensor member 110 may be rigid. The sensor member 110 may be hollow and define an interior volume.

The sensor member 110 includes at least one sensor 111 (depicted by a dashed circle) configured to sense one or more parameters of the gas turbine engine 10. In some embodiments, the at least one sensor 111 may be at least partially disposed within the interior volume of the sensor member 110.

In an embodiment, each of the at least one sensor 111 may be a microwave sensor, a camera sensor, a temperature sensor, a pH sensor, a chemical element sensor, or a pressure sensor. The at least one sensor 111 may be coupled to the sensor member 110 using any suitable mechanism. The at least one sensor 111 may provide in-flight operational data of the gas turbine engine 10, which may be used to monitor health and performance of the gas turbine engine 10. In other words, the at least one sensor 111 may provide operational data of the gas turbine engine 10, whilst the gas turbine engine is running (operating).

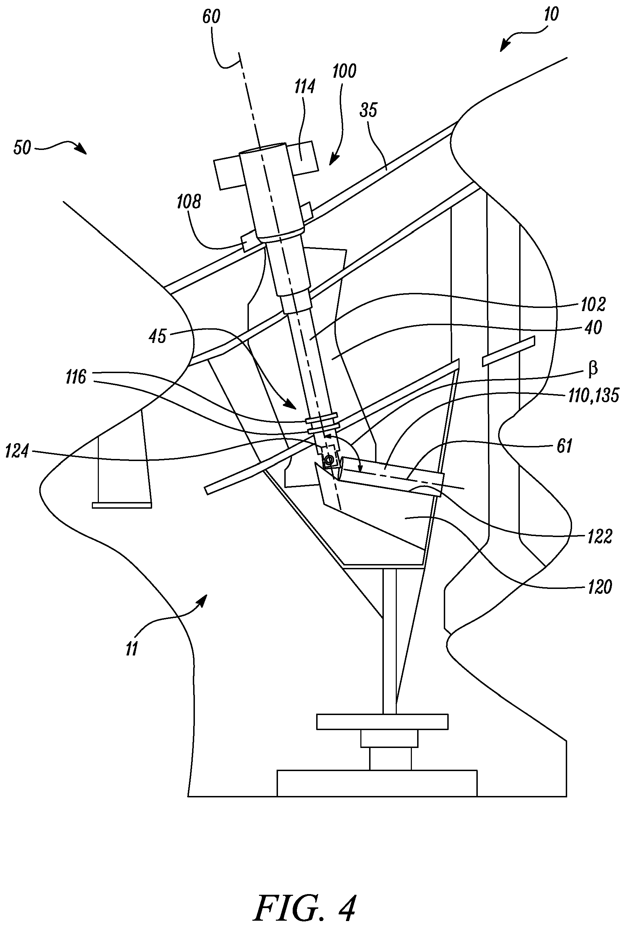

The sensor member 110 is pivotally coupled to the elongate member 102 at the second end 106. The sensor member 110 is pivotable relative to the elongate member 102 between an insertion position 130 (shown in FIG. 2) and a sensing position 135 (shown in FIG. 4). In an embodiment, the inspection assembly 100 further includes a pin joint 112 that pivotally couples the sensor member 110 to the elongate member 102. The pin joint 112 may define a pivot axis about which the sensor member 110 may pivot at least between the insertion position 130 and the sensing position 135.

Referring now to **FIGS. 2 to 4****,** the insertion position 130 may be an angular position of the sensor member 110 defined with respect to the elongate member 102 at which the sensor member 110 can be inserted into the engine core 11 and the elongate member 102 can be at least partially inserted into the engine core 11. In the insertion position 130, the sensor member 110 is inclined by a first inclination angle α with respect to the longitudinal axis 60. The first inclination angle α may be defined between the longitudinal axis 60 of the elongate member 102 and the longitudinal axis 61 of the sensor member 110. In some embodiments, the first inclination angle α may be in a range of from 0 degrees to 5 degrees. In an embodiment, the first inclination angle α is zero, such that the sensor member 110 is parallel to the longitudinal axis 60 in the insertion position 130. In other words, the sensor member 110 may be aligned with the longitudinal axis 60 in the insertion position 130.

The sensing position 135 may be an angular position of the sensor member 110 defined with respect to the elongate member 102 at which the at least one sensor 111 is optimally positioned to sense the one or more parameters of the gas turbine engine 10. In the sensing position 135, the sensor member 110 is inclined by a second inclination angle β with respect to the longitudinal axis 60. The second inclination angle β is greater than the first inclination angle α. In an embodiment, the second inclination angle β is from 5 degrees to 120 degrees.

The inspection system 50 further includes a guidance member 120 that forms part of or is configured to be fixedly coupled to a static structure 55 that is located within the engine core 11 of the gas turbine engine 10. The guidance member 120 includes a guidance surface 122 that faces the inspection assembly 100. The guidance surface 122 is inclined to the longitudinal axis 60 of the elongate member 102 by a guidance angle δ. The guidance angle δ may correspond to the second inclination angle β. In an embodiment, the guidance angle δ is from 5 degrees to 120 degrees.

The inspection system 50 further includes a locking mechanism 124 (depicted by dashed rectangle) operatively coupled to the sensor member 110. The locking mechanism 124 is configured to selectively lock the sensor member 110 in the sensing position 135 (shown in FIG. 4). In some embodiments, the inspection assembly 100 may include the locking mechanism 124. The locking mechanism 124 may include mechanical linkages that can selectively lock the sensor member 110 in the sensing position 135. In an embodiment, the locking mechanism 124 includes a biasing member 125 (depicted by a rectangle in FIG. 3) connected between the elongate member 102 and the sensor member 110. The biasing member 125 may include, for example, a spring, an elastic element, and the like.

Upon insertion of the elongate member 102 into the engine core 11, the sensor member 110 is configured to engage with the guidance surface 122. Specifically, upon insertion of the elongate member 102 into the engine core 11, the sensor member 110 engages with the guidance surface 122.

Upon engagement with the guidance surface 122, the sensor member 110 is configured to pivot relative to the elongate member 102 from the insertion position 130 (shown in FIG. 2) to the sensing position 135 (shown in FIG. 4) while the elongate member 102 is being inserted into the engine core 11. Specifically, upon engagement with the guidance surface 122, the sensor member 110 pivots relative to the elongate member 102 from the insertion position 130 to the sensing position 135 while the elongate member 102 is being inserted into the engine core 11. As discussed above, the sensor member 110 is inclined by the second inclination angle β with respect to the longitudinal axis 60 in the sensing position 135. In the sensing position 135, the at least one sensor 111 may have a line of sight to the target under all normal and abnormal conditions where the at least one sensor 111 is requested to operate. For example, the target may be a rotating component of the gas turbine engine, such as a disc of one of the turbines 17, 19 of the gas turbine engine 10. The at least one sensor 111 may sense a proximity of the target from the at least one sensor 111 under normal and abnormal conditions. Determination of whether the gas turbine engine 10 is operating in a normal condition or an abnormal condition may be based at least in part on an output from sensor 111. For example, the output from sensor 111 (as one or more signals) may determine whether an axial separation (i.e., separation in a direction parallel to principal axis 9) between the sensing position 135 of sensor 111 and the adjacent turbine disc when the gas turbine engine 10 is running is as expected (normal operation) or is outside expectation (abnormal operation). As a result, the pivotal movement of the sensor member 110 to the sensing position 135 may ensure that the at least one sensor 111 operates optimally under all normal and abnormal conditions of the gas turbine engine 10.

Pivotal movement of sensor member 110 from first inclination angle α to second inclination angle β may aid insertion and/or removal of sensor 111 into gas turbine 10 though static aerodynamic fairing 40. This is because it reduces the required internal cross-sectional area of a passageway through static aerodynamic fairing 40 along which sensor 111 passes, en-route to the sensor 111 reaching sensing position 135. Insertion and removal of the sensor 111 is therefore eased, enabling the sensor 111 to be a line replaceable unit (LRU).

Upon pivotal movement of the sensor member 110 to the sensing position 135, the sensor member 110 is configured to be locked in the sensing position 135. Specifically, upon pivotal movement of the sensor member 110 to the sensing position 135, the locking mechanism 124 locks the sensor member 110 in the sensing position 135. The guidance member 120 may additionally support the sensor member 110 in the sensing position 135.

The inspection assembly 100 of the inspection system 50 may be installed in the gas turbine engine 10 from outside of the engine core 11. The inspection system 50 may allow installation and removal of the inspection assembly 100 to and from the gas turbine engine 10 with reduced, if any, disassembly of the engine core 11. The inspection assembly 100 may employ a combination of a linear movement of the elongate member 102 into the engine core 11 and the pivotal movement of the sensor member 110 into the sensing position 135, such that the sensor member 110 moves to and can be selectively locked in the sensing position 135. In the sensing position 135 of the sensor member 110, the at least one sensor 111 may optimally sense the one or more parameters of the gas turbine engine 10. Subsequently, the coupler 108 may removably couple the elongate member 102 to the casing 35 to install the inspection assembly 100 in the gas turbine engine 10. This may allow the inspection assembly 100 to be a line replaceable unit (LRU). That is, the inspection assembly 100 may be quickly replaceable at an operating location, such as an airport or aircraft maintenance facility. The inspection system 50 may thus reduce costs and time associated with the replacement of the at least one sensor 111.

In an embodiment, the inspection assembly 100 further includes one or more cables 113 (shown by a dashed line in FIG. 3), optionally mineral insulated cables, at least partially received through the elongate member 102 and communicably coupled to the at least one sensor 111. The one or more cables 113 being at least partially received through the elongate member 102 may allow reliable routing and bending of the one or more cables 113 during installation of the inspection assembly 100. The inspection assembly 100 may allow reliable routing and bending of mineral insulated cables, which can be difficult to route and bend in confined space such as the engine core 11.

In an embodiment, the inspection assembly 100 further includes a connector 114 disposed proximal to the first end 104 of the elongate member 102 and connected to the one or more cables 113. Upon installation of the inspection assembly 100, the connector 114 may remain disposed outside of the engine core 11, which may reduce the space required by the inspection assembly 100 within the engine core 11.

In an embodiment, the inspection assembly 100 further includes a processor 115 (depicted by a block in FIG. 3) communicably coupled to the at least one sensor 111 via the connector 114 and the one or more cables 113. The processor 115 may be configured to receive one or more signals as output from the at least one sensor 111. The processor 115 may be communicably coupled to the connector 114 via a wireless or a wired connection. The processor 115 may monitor the one or more parameters of the gas turbine engine 10 based on the one or more signals received from the at least one sensor 111.

In an embodiment, the inspection assembly 100 further includes one or more sealing rings 116 disposed around the elongate member 102. The one or more sealing rings 116 are configured to provide a seal between segregated internal cavities 45. The one or more sealing rings 116 may facilitate in maintaining compliance with a secondary air system (SAS) cavity design of the gas turbine engine 10. Only one cavity 45 is indicated in FIG. 4 for clarity purposes.

In an embodiment, the inspection system 50 further includes an actuator 126 (shown in FIG. 3) at least partially received through the elongate member 102 and operably coupled to the locking mechanism 124. The actuator 126 may also provide a visual confirmation that the sensor member 110 is locked in the sensing position 135. The actuator 126 may be configured to operate the locking mechanism 124 to unlock the sensor member 110 from the sensing position 135 (shown in FIG. 4), such that the sensor member 110 is pivotable to the insertion position 130.

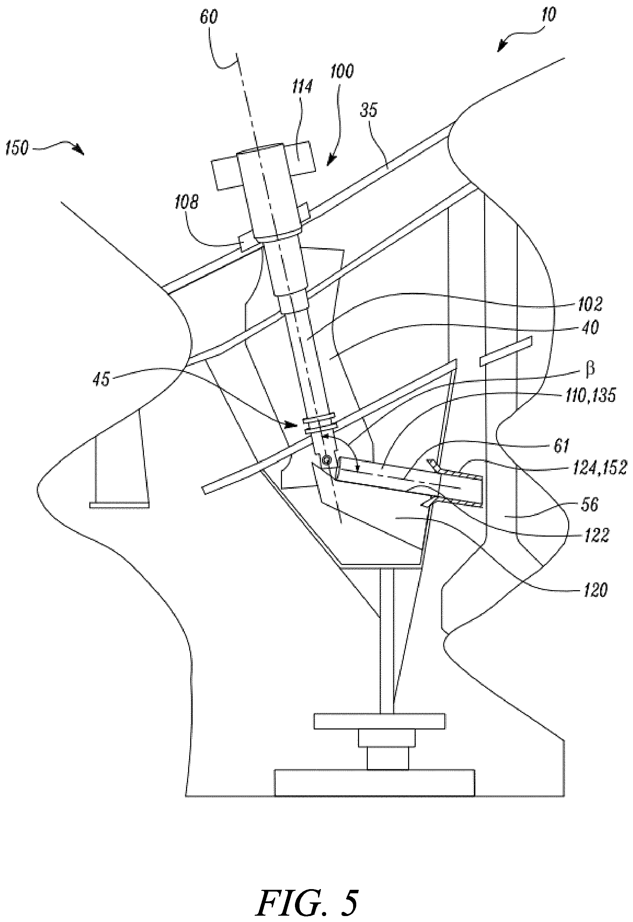

**FIG. 5** shows a diagram of an inspection system 150 for the gas turbine engine 10 in accordance with another embodiment of the present disclosure. The inspection system 150 is similar to the inspection system 50 of FIGS. 2 and 4, with like elements designated by like reference characters. However, the inspection system 150 includes a different configuration of the locking mechanism 124 as compared to inspection system 50.

Specifically, in the illustrated embodiment of FIG. 5, the locking mechanism 124 includes a funnel 152 (hatched) configured to removably receive the sensor member 110 therein. The funnel 152 may form part of or be fixedly coupled to a static structure 56 that is located within the engine core 11 of the gas turbine engine 10. The static structure 56 may be the same as or different from the static structure 55. The funnel 152 may engage with and restrict movement of the sensor member 110 from the sensing position 135, such that the sensor member 110 is retained (or locked) in the sensing position 135.

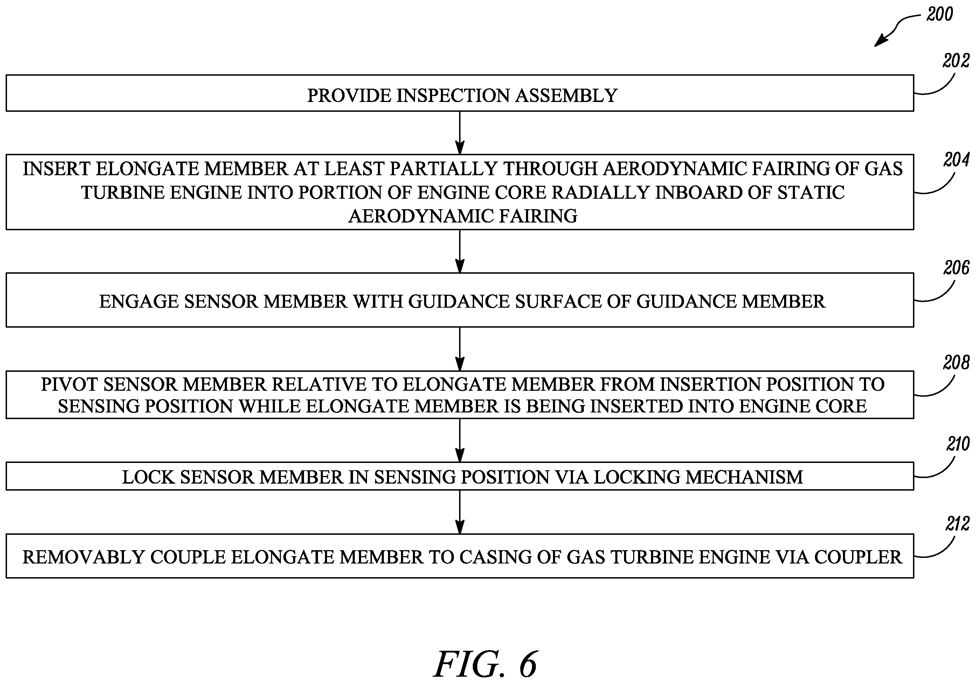

**FIG. 6** shows a flowchart depicting various steps of an inspection method 400 for a gas turbine engine having an engine core, a casing, and a static aerodynamic fairing in accordance with an embodiment of the present disclosure. The inspection method 400 may be employed to inspect the gas turbine engine 10 of FIG. 1. The inspection method 400 will be described with further reference to FIGS. 2 to 5.

At step 202, the inspection method 200 includes providing an inspection assembly. The inspection assembly includes an elongate member extending along a longitudinal axis from a first end to a second end. The inspection assembly further includes a coupler disposed proximal to the first end of the elongate member. The inspection assembly further includes a sensor member pivotally coupled to the elongate member at the second end. The sensor member includes at least one sensor configured to sense one or more parameters of the gas turbine engine. Referring to FIGS. 2 and 3, for example, the inspection method 200 may include providing the inspection assembly 100.

At step 204, the inspection method 200 further includes inserting the elongate member at least partially through the static aerodynamic fairing of the gas turbine engine into a portion of the engine core radially inboard of the static aerodynamic fairing. Referring to FIG. 2, for example, the inspection method 200 may include inserting the elongate member 102 at least partially through the static aerodynamic fairing 40 of the gas turbine engine 10 into a portion of the engine core 11 radially inboard of the static aerodynamic fairing 40.

At step 206, the inspection method 200 further includes engaging the sensor member with a guidance surface of a guidance member that forms part of or is configured to be fixedly coupled to a static structure located within the engine core of the gas turbine engine. In an insertion position, the sensor member is inclined by a first inclination angle with respect to the longitudinal axis. In a sensing position, the sensor member is inclined by a second inclination angle with respect to the longitudinal axis. The second inclination angle is greater than the first inclination angle. Referring to FIG. 2, for example, the inspection method 200 may include engaging the sensor member 110 with the guidance surface 122 of the guidance member 120.

At step 208, the inspection method 200 further includes pivoting the sensor member relative to the elongate member from the insertion position to the sensing position while the elongate member is being inserted into the engine core. Referring to FIGS. 2 and 4, for example, the inspection method 200 may include pivoting the sensor member 110 relative to the elongate member 102 from the insertion position 130 to the sensing position 135 while the elongate member 102 is being inserted into the engine core 11.

At step 210, the inspection method 400 further includes locking, via a locking mechanism, the sensor member in the sensing position. Referring to FIGS. 3 and 4, for example, the inspection method 200 may include locking, via the locking mechanism 124, the sensor member 110 in the sensing position 135.

In an embodiment, the inspection method 200 further includes communicably coupling a processor to the at least one sensor by a connector and one or more cables, optionally mineral insulated cables. The inspection method 200 further includes receiving, by the processor, one or more signals from the at least one sensor. Referring to FIG. 3, for example, the inspection method 200 may include communicably coupling the processor 115 to the at least one sensor 111 by the connector 114 and the one or more cables 113, and receiving, by the processor 115, the one or more signals from the at least one sensor 111.

In an embodiment, the inspection method 200 further includes operating, via an actuator, the locking mechanism to unlock the sensor member from the sensing position, such that the sensor member is pivotable to the insertion position. Referring to FIGS. 2 to 4, for example, the inspection method 200 may include operating, via the actuator 126, the locking mechanism 124 to unlock the sensor member 110 from the sensing position 135, such that the sensor member 110 is pivotable to the insertion position 130.

At step 212, the inspection method 200 further includes removably coupling, via the coupler, the elongate member to a casing of the gas turbine engine. Referring to FIG. 4, for example, the inspection method 200 may include removably coupling, via the coupler 108, the elongate member 102 to the casing 35 of the gas turbine engine 10.

The inspection method 200 may enable installation of the inspection assembly in the gas turbine engine from outside of the engine core. The inspection method 200 may allow installation and removal of the inspection assembly to and from the gas turbine engine with reduced, if any, disassembly of the engine core. Using the inspection method 200, the inspection assembly may employ a combination of a linear movement of the elongate member into the engine core and the pivotal movement of the sensor member into the sensing position, such that the sensor member moves to and can be selectively locked in the sensing position. In the sensing position of the sensor member, the at least one sensor may optimally sense the one or more parameters of the gas turbine engine. Subsequently, the coupler may removably couple the elongate member to the casing to install the inspection assembly in the gas turbine engine. This may allow the inspection assembly to be a line replaceable unit (LRU). That is, the inspection assembly may be quickly replaceable at an operating location. The inspection method 200 may thus reduce costs and time associated with the replacement of the at least one sensor.

Various examples have been described, each of which comprise various combinations of features. It will be appreciated by those skilled in the art that, except where clearly mutually exclusive, any of the features may be employed separately or in combination with any other features and the invention extends to and includes all combinations and sub-combinations of one or more features described herein.

## Claims

1. An inspection system (50, 150) for a gas turbine engine (10) having an engine core (11), a casing (35), and a static aerodynamic fairing (40), the inspection system (50, 150) comprising:
an inspection assembly (100) comprising:
an elongate member (102) extending along a longitudinal axis (60) from a first end (104) to a second end (106), wherein the elongate member (102) is configured to be at least partially inserted through the static aerodynamic fairing (40) of the gas turbine engine (10) into a portion of the engine core (11) radially inboard of the static aerodynamic fairing (40);
a coupler (108) disposed proximal to the first end (104) of the elongate member (102), wherein the coupler (108) is configured to removably couple the elongate member (102) to the casing (35) of the gas turbine engine (10); and
a sensor member (110) pivotally coupled to the elongate member (102) at the second end (106), the sensor member (110) comprising at least one sensor (111) configured to sense one or more parameters of the gas turbine engine (10), wherein the sensor member (110) is pivotable relative to the elongate member (102) between an insertion position (130) and a sensing position (135), wherein, in the insertion position (130), the sensor member (110) is inclined by a first inclination angle (α) with respect to the longitudinal axis (60), wherein, in the sensing position (135), the sensor member (110) is inclined by a second inclination angle (β) with respect to the longitudinal axis (60), and wherein the second inclination angle (β) is greater than the first inclination angle (α);
a guidance member (120) that forms part of or is configured to be fixedly coupled to a static structure (55) that is located within the engine core (11) of the gas turbine engine (10), the guidance member (120) comprising a guidance surface (122) that faces the inspection assembly (100), wherein the guidance surface is (122) inclined to the longitudinal axis (60) of the elongate member (102) by a guidance angle (δ); and
a locking mechanism (124) operatively coupled to the sensor member (110), wherein the locking mechanism (124) is configured to selectively lock the sensor member (110) in the sensing position (135);
wherein, upon insertion of the elongate member (102) into the engine core (11), the sensor member (110) engages with the guidance surface (122), wherein, upon engagement with the guidance surface (122), the sensor member (110) pivots relative to the elongate member (102) from the insertion position (130) to the sensing position (135) while the elongate member (102) is being inserted into the engine core (11), and wherein, upon pivotal movement of the sensor member (110) to the sensing position (135), the locking mechanism (124) locks the sensor member (110) in the sensing position (135).

2. The inspection system (50, 150) of claim 1, wherein the inspection assembly (100) further comprises a pin joint (112) that pivotally couples the sensor member (110) to the elongate member (102).

3. The inspection system (50, 150) of any preceding claim, wherein the inspection assembly (100) further comprises one or more cables (113), optionally mineral insulated cables, at least partially received through the elongate member (102) and communicably coupled to the at least one sensor (111).

4. The inspection system (50, 150) of claim 3, wherein the inspection assembly (100) further comprises:
a connector (114) disposed proximal to the first end (104) of the elongate member (102) and connected to the one or more cables (113); and
a processor (115) communicably coupled to the at least one sensor (111) via the connector (114) and the one or more cables (113), wherein the processor (115) is configured to receive one or more signals from the at least one sensor (111).

5. The inspection system (50, 150) of any preceding claim, wherein the inspection assembly (100) further comprises one or more sealing rings (116) disposed around the elongate member (102) and configured to provide a seal between segregated internal cavities (45).

6. The inspection system (50, 150) of any preceding claim, wherein the first inclination angle (α) is zero, such that the sensor member (110) is parallel to the longitudinal axis (60) in the insertion position (130).

7. The inspection system (50, 150) of any preceding claim, wherein the second inclination angle (β) is equal to the the guidance angle (δ) and is from 5 degrees to 120 degrees.

8. The inspection system (50, 150) of any preceding claim, wherein each of the at least one sensor (111) is a microwave sensor, a camera sensor, a temperature sensor, a pH sensor, a chemical element sensor, or a pressure sensor.

9. The inspection system (50) of any preceding claim, wherein:
the locking mechanism (124) comprises a biasing member (152) connected between the elongate member (102) and the sensor member (110);
or,
the locking mechanism (124) comprises a funnel (152) configured to removably receive the sensor member (110) therein.

10. The inspection system (50) of any one of claims 1 to 8, further comprising an actuator (126) at least partially received through the elongate member (102) and operably coupled to the locking mechanism (124), wherein the actuator (126) is configured to operate the locking mechanism (124) to unlock the sensor member (110) from the sensing position (135), such that the sensor member (110) is pivotable to the insertion position (130).

11. An inspection assembly (100) for a gas turbine engine (10) having an engine core (11), a casing (35), and a static aerodynamic fairing (40), the inspection assembly (100) comprising:
an elongate member (102) extending along a longitudinal axis (60) from a first end (104) to a second end (106), wherein the elongate member (102) is configured to be at least partially inserted through the static aerodynamic fairing (40) of the gas turbine engine (10) into a portion of the engine core (11) radially inboard of the static aerodynamic fairing (40);
a coupler (108) disposed proximal to the first end (104) of the elongate member (102), wherein the coupler (108) is configured to removably couple the elongate member (102) to the casing (35) of the gas turbine engine (10); and
a sensor member (110) pivotally coupled to the elongate member (102) at the second end (106), the sensor member (110) comprising at least one sensor (111) configured to sense one or more parameters of the gas turbine engine (10), wherein the sensor member (110) is pivotable relative to the elongate member (102) between an insertion position (130) and a sensing position (135), wherein, in the insertion position (130), the sensor member (110) is inclined by a first inclination angle (α) with respect to the longitudinal axis (60), wherein, in the sensing position (135), the sensor member (110) is inclined by a second inclination angle (β) with respect to the longitudinal axis (60), and wherein the second inclination angle (β) is greater than the first inclination angle (α);
wherein, upon insertion of the elongate member (102) into the engine core (11), the sensor member (110) is configured to engage with a guidance surface (122) of a guidance member (120) that forms part of or is configured to be fixedly coupled to a static structure (55) located within the engine core (11) of the gas turbine engine (10), wherein, upon engagement with the guidance surface (122), the sensor member (110) is configured to pivot relative to the elongate member (102) from the insertion position (130) to the sensing position (135) while the elongate member (102) is being inserted into the engine core (11), and wherein, upon pivotal movement of the sensor member (110) to the sensing position (135), the sensor member (110) is configured to be locked in the sensing position (135).

12. The inspection assembly (100) of claim 11, further comprising a pin joint (112) that pivotally couples the sensor member (110) to the elongate member (102).

13. The inspection assembly (100) of claim 11 or claim 12, further comprising one or more cables (113), optionally mineral insulated cables, at least partially received through the elongate member (102) and communicably coupled to the at least one sensor (111).

14. The inspection assembly (100) of claim 13, further comprising:
a connector (114) disposed proximal to the first end (104) of the elongate member (102) and connected to the one or more cables (113); and
a processor (115) communicably coupled to the at least one sensor (111) via the connector (114) and the one or more cables (113), wherein the processor (115) is configured to receive one or more signals from the at least one sensor (111).

15. The inspection assembly (100) of any one of claims 11 to 14, further comprising one or more sealing rings (116) disposed around the elongate member (102) and configured to provide a seal between segregated internal cavities (45).
